(19) Europäisches Patentamt
European Patent Office
Office européen des brevets

(11) **EP 2 940 634 A1**

(12) **EUROPEAN PATENT APPLICATION**

(43) Date of publication:
**04.11.2015 Bulletin 2015/45**

(51) Int Cl.:
*G06Q 10/10* (2012.01)     *G06Q 50/00* (2012.01)
*G06F 17/30* (2006.01)

(21) Application number: **15159731.7**

(22) Date of filing: **18.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **30.04.2014   US 201461986582 P**
**04.06.2014   US 201414296176**

(71) Applicant: **Linkedin Corporation**
**Mountain View, California 94043 (US)**

(72) Inventors:
• **Sinha, Shakti Dhirendraji**
**California, CA California 94089 (US)**
• **Venkataraman, Ganesh**
**California, CA California 95129 (US)**

(74) Representative: **Collins, John David**
**JCIP Limited**
**Hillington Park Innovation Centre**
**1 Ainslie Road**
**Glasgow G52 4RU (GB)**

(54)    **CONTENT SEARCH VERTICAL**

(57)    Disclosed are methods, systems, and machine readable mediums which find a special set of keywords which, when used to search a supplemental set of search verticals (e.g., the newly added search verticals), return high quality results. When a user enters a search containing one or more keywords from the special set of keywords, the system may search both the standard set of search verticals (as normal), but also the one or more keywords may be used to search the supplemental set of search verticals. Results from both may then be presented to the user.

EP 2 940 634 A1

**Description**

COPYRIGHT NOTICE

A portion of the disclosure of this patent document contains material that is subject to copyright protection. The copyright owner has no objection to the facsimile reproduction by anyone of the patent document or the patent disclosure, as it appears in the Patent and Trademark Office patent files or records, but otherwise reserves all copyright rights whatsoever. The following notice applies to the software and data as described below and in the drawings that form a part of this document: Copyright LinkedIn, Inc, All Rights Reserved.

BACKGROUND

A social networking service is a computer or web-based service that enables users to establish links or connections with persons for the purpose of sharing information with one another. Some social network services aim to enable friends and family to communicate and share with one another, while others are specifically directed to business users with a goal of facilitating the establishment of professional networks and the sharing of business information. For purposes of the present disclosure, the terms "social network" and "social networking service" are used in a broad sense and are meant to encompass online, computer based services aimed at connecting friends and family (often referred to simply as "social networks"), as well as online, computer based services that are specifically directed to enabling business people to connect and share business information (also commonly referred to as "social networks" but sometimes referred to as "business networks" or "professional networks").

BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.

FIG. 1 shows a flowchart of a method of presenting highly relevant results from a non-selected search vertical according to some examples of the present disclosure.
FIG. 2 shows a flowchart of a method of calculating the set of special keywords from the corpus of documents according to some examples of the present disclosure.
FIG. 3 shows a schematic of a social networking system for enhancing a user search experience through the presentation of additional content results according to some examples of the present disclosure.
FIG. 4 is a block diagram of a machine upon which one or more embodiments may be implemented according to some examples of the present disclosure.

DETAILED DESCRIPTION

In the following, a detailed description of examples will be given with references to the drawings. It should be understood that various modifications to the examples may be made. In particular, elements of one example may be combined and used in other examples to form new examples.
Many of the examples described herein are provided in the context of a social networking website or service. However, the applicability of the inventive subject matter is not limited to a social networking service.
A social networking service is an online service, platform and/or site that allows members of the service to build or reflect social relations amongst each other. Typically, members construct profiles, which may include various attributes and values for those attributes which describes a member or their activities. Attributes may include personal information such as the member's name, contact information, employment information, photographs, personal messages, status information, links to related content, blogs, and so on. As already noted, social networking services allow members to build or reflect social relations amongst each other. One way social networks facilitate this is by providing members with the ability to identify, and establish links or connections with other members. For instance, in the context of a business-oriented social networking service, a person may establish a link or connection with his or her business contacts, including work colleagues, clients, customers, personal contacts, and so on. With a personal social networking service, a person may establish links or connections with his or her friends, family, or business contacts.
A connection is generally formed using an invitation process in which one member "invites" a second member to form a link. The second member then has the option of accepting or declining the invitation. If the second member accepts the invitation, a connection is formed. In general, a connection or link grants an information access privilege, such that a first person who has established a connection with a second person is, via the establishment of that connection, authorizing the second person to view or access certain non-publicly available portions of their profiles which may include communications they have authored (e.g., blog posts, messages, "wall" postings, or the like). In some examples, the connection or link also grants an information access privilege to the first user to view or access certain non-publicly available portions of the user profile of the second user. Of course, depending on the particular implementation of the social networking service, the nature and type of the information that is shared as a result of the information access privilege, as well as the granularity with which the access privileges may be defined to protect certain types of data may vary greatly.

Social networks may also allow members to build or reflect the social relations amongst members by providing them with the ability to subscribe or follow other members. A subscription or following model is where one member "follows" another member without the need for mutual agreement. Typically in this model, the follower is notified of public messages and other communications posted by the member that is followed. An example social networking service that follows this model is Twitter -- a micro-blogging service that allows members to follow other members without explicit permission. Other, connection based social networking services also may allow following type relationships as well.

While a social networking services may be generally described in terms of typical use cases (e.g., for personal and business networking respectively), it will be understood by one of ordinary skill in the art with the benefit of Applicant's disclosure that these are the typical use cases and that a social networking service whose typical use case is for business purposes may be used for personal purposes (e.g., connecting with friends, classmates, former classmates, and the like) as well as, or instead of business networking purposes and a personal social networking service may likewise be used for business networking purposes as well as or in place of social networking purposes. Both a business oriented social networking service and a personal oriented social networking service are herein referred to as a "social networking service."

Social networking services offer a vast amount of information about members, companies, educational institutions, and their interrelationships. To allow members to make use of this information, social networking services may offer members the ability to search this information. A search may be run on one or more "search verticals." A search vertical describes a specific type of content on which a search query is run and for which results are presented. For example, a social networking service may have content related to people, jobs, companies, groups, universities, and the like. Subsequently the social networking service may have corresponding search verticals (e.g., people, jobs, companies, groups, universities, and the like) for searching each type of content. Thus a search query running on a people search vertical will return a list of information on people that match the search query, and a search query running on a jobs search vertical will return a list of information on jobs that match the search query. Verticals may be implemented by filtering out content that does not match the search verticals utilized (e.g., for a jobs search vertical, searching all content and filtering out all results that are not jobs related) or may be implemented by only searching content corresponding to the particular vertical (e.g., for a jobs search vertical, only searching content marked as job related).

In some examples, users may select the particular search verticals used in their search. In other examples, rather than have a user select which search verticals to use for a search, many social networking services provide unified searches. These unified searches may identify one or more appropriate search verticals for a particular search. In some examples, the appropriate search verticals may be identified based upon a predetermined list of search verticals that will be searched in response to a query. In other examples, the social networking service may detect the intent of the user based upon the user's query. The intent may then be utilized to select appropriate search verticals. For example, a search for "Joe Smith" is likely searching for people named "Joe Smith," thus an appropriate search vertical would be a search vertical that searches for people or information about people. In some cases, more than one search vertical may be selected. For example, a search for "Stanford University" could be intended to return the social networking page describing the University itself, people who work at Stanford University or people who are Stanford students or alumni. In some examples, the system may select search verticals for both institutions and for people.

When a new type of content is added (and thus a new search vertical to search for that content) to a social networking service, the new search vertical may not be added to the predetermined list of verticals to use in searching a user query (e.g., the administrator who sets up the list may not think the new vertical is appropriate for the unified search). In other examples, as the search vertical and the corresponding content it searches is new, users may not intend on searching for that new type of content as they may be unaware of the new content. Despite this, a particular set of keywords used in queries submitted by users may have a very strong set of results from the new vertical that are highly relevant to the user. Even if the user did not intend to search on the new vertical, the user experience may be enhanced by surfacing results from the new vertical - provided the confidence on quality of results for the query and user is high.

As used herein, a "standard" set of search verticals is one or more search verticals which are selected by the user or by the social networking service (either automatically based upon intent or through a predetermined list, or the like) for use in searching information (such as information in a social networking service). As used herein, a "supplemental" set of search verticals are search verticals that are not, or are not usually, in the standard set of search verticals selected for use in a search by the user or by the social networking service. These supplemental search verticals may be predetermined by the social networking service (e.g., by a network administrator). In examples in which the standard set of search verticals is predetermined by the social networking service the supplemental search verticals may be search verticals that are not on the predetermined list of standard search verticals. In examples in which the standard search verticals are determined by the social networking service through algorithms that determine user intent, the supplemental search verticals may be search verticals that are not likely to be selected based upon the intent of the user.

Disclosed in some examples are methods, systems, and machine readable mediums which find a special set of keywords which, when used to search a supplemental set of search verticals (e.g., the newly added search verticals), return high quality results. When a user enters a search containing one or more keywords from the special set of keywords, the system may search both the standard set of search verticals (as normal), but also the one or more keywords may be used to search the supplemental set of search verticals. Results from both may then be presented to the user. Searches on the standard set of search verticals that do not contain one of these special keywords may not contain results from the supplemental set of search verticals.

A keyword may be one or more words used to search for content. As used herein, a set includes one or more members. The special set of keywords may be determined by finding popular terms in a corpus of documents. The corpus of documents may be tokenized and each token may be scored based upon the token's frequency of appearance in the corpus. The score for each token may be adjusted by one or more indicators, such as the appearance of the token in a particular document field (e.g., author, title, or the like), a popularity of an article in which the token appears, an appearance of the token in content authored by a popular author, and the like. The top scoring tokens may then be utilized as the special set of keywords. The corpus of documents may include all content on the social networking service, the content corresponding to search verticals in the supplemental set, the content corresponding to search verticals in the standard set, user profile information, and the like.

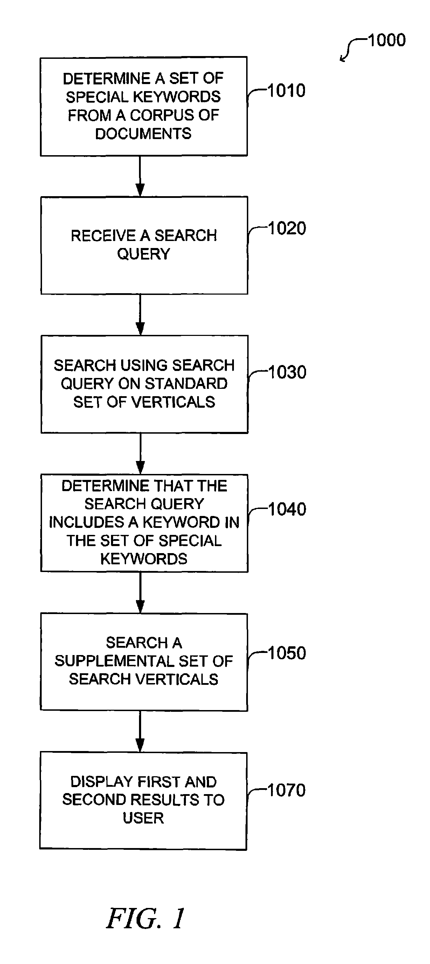

Turning now to FIG. 1 a method 1000 of presenting highly relevant results from a non-selected search vertical according to some examples is shown. At operation 1010 a set of special keywords from a corpus of documents is determined. As already noted, the corpus of documents may include all content on the social networking service, the content corresponding to search verticals in the supplemental set, the content corresponding to search verticals in the standard set, user profile information, and the like. For example, the corpus of documents may include the content for which a new search vertical was added.

At operation 1020 the system may receive a search query. For example, a user may enter a search query into a search box presented in a webpage or other user interface and the search query may be sent to the social networking service. At operation 1030, the system may search on the standard set of search verticals using the search query and the normal search algorithms to produce a first set of results. As already noted, the system may determine the standard set of search verticals for the search query based upon a calculation of the user's intentions, a selection by the user, or a predetermined list of search verticals.

At operation 1040 the system may determine that the search query includes one or more keywords in the set of special keywords (determined at operation 1010). At operation 1050, responsive to determining that the search query includes a keyword in the set of special keywords, the system may search a supplemental set of search verticals using one or more of the keywords in the user's search query that were identified at operation 1040 to return a second set of search results. At operation 1060 one or more of the first and one or more of the second set of search results may be displayed to the user. In some examples, the second set of search results may be interspersed with the regular search results, or may be set apart on the results page. The second set of search results may be set apart based on the location the results are displayed or based upon visual effects such as shading, fonts, graphics, or the like. In some examples, a graphical element set apart from the first search results based upon location, visual effects, or both may be termed a "secondary cluster."

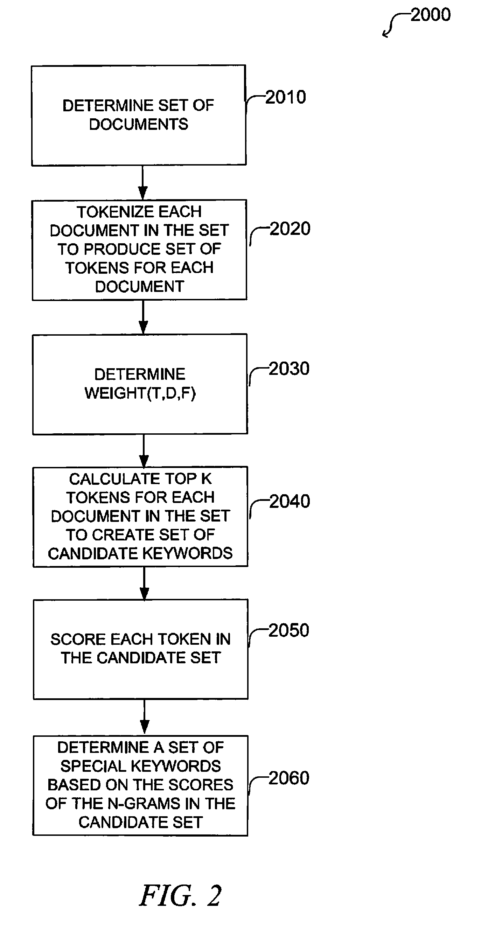

Turning now to FIG. 2 an example of calculating the set of special keywords from the corpus of documents 2000 is shown according to some examples of the present disclosure. At operation 2010 the set of documents defining the corpus which is used to calculate the special keywords may be determined. As already noted the corpus of documents may include all content on the social networking service, the content corresponding to search verticals in the supplemental set, the content corresponding to search verticals in the standard set, user profile information, and the like. For example, the corpus may include content from any one or more of: articles, blog posts, twitter tweets, member profiles, company profiles, university profiles, and the like. The documents in the corpus may have one or more fields which provide information about the document. For example, an article may have a title, an author, and other bibliographic information. Member profiles may have various fields describing the member and his or her connections, educational institutions, employment histories and the like.

The set of documents may then be "tokenized" to produce a set of tokens for each document at operation 2020. For ease of description, as used herein, a token may comprise a set of one or more words. The tokenization reduces the document to one or more sets of n-grams. An n-gram is a contiguous sequence of $n$ words from the document. Thus a 1-gram produces a set of unique tokens comprising individual words that appear in the document. A 2-gram produces a set of unique tokens with all combinations of two contiguous words. Thus, the phrase "to be, or not to be" produces a 1-gram set of {to, be, or, not, to, be} and a 2-gram set of {to be, be or, or not, not to, to be} and likewise a 3-gram set of {to be or, be or not, or not to, not to be}. In some examples, the set of tokens produced for each document at operation 2020 may include one or more of 1-grams, 2-grams, 3-grams, 4-grams, and the like. For example, the set may be 1-grams, 2-grams, and 3-grams.

In some examples, certain 1-gram tokens may be filtered out as they may be very common terms that convey little distinguishing value for the actual meaning or context of the document while at the same time introducing noise into the results. These tokens may be termed "stop words." The system may keep or determine a list of stop words to filter out. Example stop words may include: {the, is, at, to, be, or, not, which, on}. Note that in some examples the higher order n-grams (e.g., >1-grams) are not filtered for these stop words as some phrases that actually convey meaning utilize *only* words that may be considered stop words. A good example is the phrase *"to be, or not to be."*

At operation 2030, a weight is calculated for each *(t,d,f)* where *t* is the token, *d* is the document, and *f* is the field where the token *t* appeared in document d. This weight(*t,d,f*) is calculated based upon the frequency with which the token appears in that field of that document. The weight for each of these (*t,d,f*) tuples may be adjusted by one or more adjustment factors. For example, particular fields may have a higher relevance in determining important keywords than others. For example, a token appearing in a title is likely more indicative of relevance than a token appearing in the text itself. Thus, for example, a weight for a token A, in document D, that appears in the field "title" may be greater than a weight for a token A, in document D, that appears in the text of the content. This weighting function may be described mathematically by the following equation:

$$weight(t, d, f) = adjustment(f) * t_f(t, d, f)$$

Where adjustment(f) is the weighting increase or decrease given for a particular field *f,* and where the $t_f(t,d,f)$ may be the normalized token frequency of a token *t* in field *f* of document *d.* The adjustment(f) in some examples may be defaulted to 1.0 and increased for fields that are more important (such as title or author name) and decreased for less important fields.

In some examples, the per-field *weight*(*t,d,f*) tuple for each token is summed to get a score for the token for each document- e.g., *weight(t, d)* = $\sum_f$ *weight(t, d, f)*. Each token is then compared to the other tokens for the document and the highest scoring tokens may be selected. At operation 2040 the top *K* tokens from each document are used to create a candidate set of keywords. Thus, for example, the top *n* scoring tokens for a document, or the top *n%* of the tokens from each document may be chosen as the candidate set of keywords, where *n* is a predetermined number. In other examples, the top *n* tokens *from all documents,* or the top *n%* of *tokens from all documents* may be utilized to create the candidate set of keywords.

At operation 2050 an aggregate score is computed for each token in the candidate set of keywords. For example, a token may be in two different documents and thus a single token may have multiple *weight(t,d)* values. The aggregate score for a token *t* may be the sum of the *weight(t,d)* scores from each of the *documents d* in which it appears. In some examples each *weight*(*t,d*) score for a particular token may be adjusted based upon the popularity of the author of the document *d* and the popularity of the document *d* itself Mathematically, this may be expressed as:

$$score(t) = \sum_{d \in D, t \in K_d} weight(t, d) * A_d * P_d$$

Where D is the set of documents in the corpus, and $K_d$ is the set of tokens extracted for each document. In some examples, the popularity of the document may be determined based upon the number of page views of the content. In some examples, the popularity of the author may be determined by the number of page views of all content produced by the author relative to other authors. In some examples, $A_d$ and $P_d$ may be normalized values.

At operation 2060 the special keywords are selected based upon the score(t) for each token. The special keywords may be the tokens that are above a particular threshold percentage (e.g., top 10% keywords), a threshold number (e.g., top 50 scoring keywords), or simply every token whose corresponding score is above a predetermined threshold (e.g., all keywords whose score(t) is > 100), or the like.

One example use of the system may be in recommending curated content. Some social networking services may curate content. That is, the social networking service may commission authors to write on various subjects, or the social networking service may select writings by authors on various subjects for the purpose of generating relevant content for members. In some examples the authors may be selected for their expertise in the subject of their writings.

The curated content may include articles, featured blog posts, featured discussions, books, tweets, messages, or other communications. In order to search this curated content, the social networking service may add a new search vertical.

In some examples, users may not expect to receive results for content such as articles, blogs, and the like when they search a social networking service. They may expect people, jobs, universities, and other content that may be more traditional for a social networking service. They may view such content turning up in a search as noise. Thus in examples in which the social networking service predetermines the standard set of search verticals, this vertical may not be selected by default (users may change this behavior in some examples). In examples in which the social networking service attempts to ascertain a searcher's intent, most searches on the social networking may not intend to search for this curated content because of the aforementioned traditional expectations of users. Nevertheless, presenting a limited amount of results to users that the system believes are highly relevant may add value to users of the social networking service.

Users may enter a search comprising one or more keywords in a search box (such as a unified search box) of the social networking service. If the keywords utilized match one or more of the special keywords selected by the system, those keywords may be used to search the curated content. The results of the normal search (without the curated content) may be presented along with the results from the curated content. The system may recommend the curated content even if the search vertical for the curated content would not otherwise be selected for searching by the search algorithms. This may apply to cases in which the search algorithms do not detect that the user intended to search the newly added search vertical and to cases in which the search vertical for the curated content is not made searchable from within the search functionality (e.g., the social networking service has made the decision not to make the vertical corresponding to the curated content searchable by default from the search functionality). The keywords used to trigger a search of the curated content may be chosen by the social networking service to correspond to keywords which produce high quality curated content results for the particular keywords the member has entered.

For example, if "big data" is selected as a special keyword, and if a user enters "big data" into the search box, the system may list search results related to members with big data skills or experience, but may also list search results for a search of the curated content using the "big data" keyword. The curated content results may be interspersed with the regular search results, or may be set apart on the results page. The curated content results may be set apart based on the location the results are displayed or based upon visual effects such as shading, fonts, graphics, or the like.

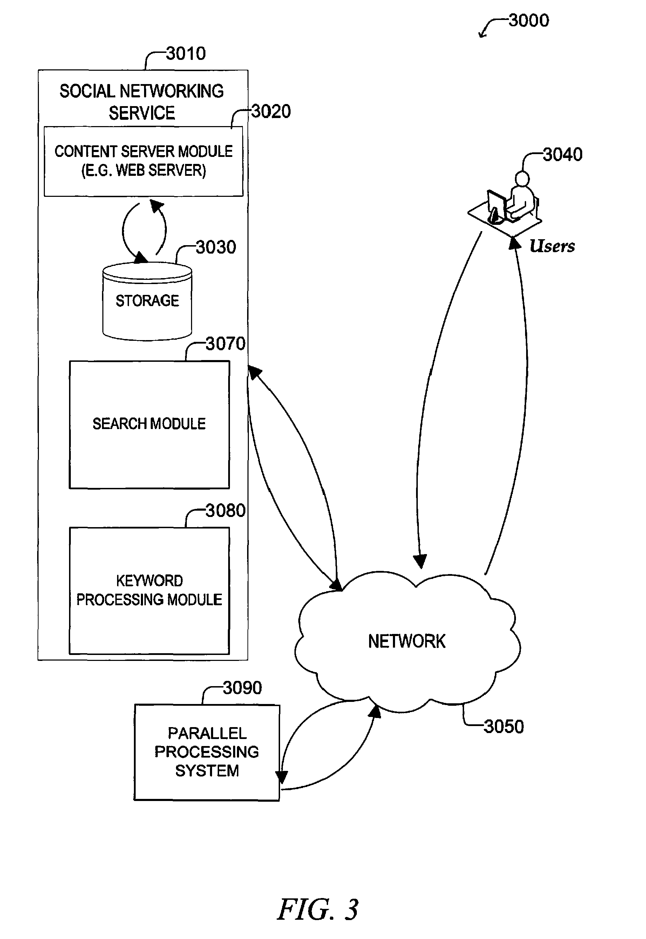

Turning now to FIG. 3, a schematic of a social networking system 3000 for enhancing a user search experience through the presentation of additional content results is shown according to some examples of the present disclosure. Social networking service 3010 may contain a content server process 3020. Content server process 3020 may communicate with storage 3030 and may communicate with one or more users 3040 through a network 3050. Content server process 3020 may be responsible for the retrieval, presentation, and maintenance of member profiles stored in storage 3030. Content server process 3020 in one example may include or be a web server that fetches or creates internet web pages. Web pages may be or include Hyper Text Markup Language (HTML), eXtensible Markup Language (XML), JavaScript, or the like. The web pages may include portions of, or all of, a member profile at the request of users 3040.

Users 3040 may include one or more members, prospective members, or other users of the social networking service 3040. Users 3040 access social networking service 3010 using a computer system through a network 3050. The network may be any means of enabling the social networking service 3010 to communicate data with users 3040. Example networks 3050 may be or include portions of: the Internet, a Local Area Network (LAN), a Wide Area Network (WAN), wireless network (such as a wireless network based upon an IEEE 802.11 family of standards), a Metropolitan Area Network (MAN), a cellular network, or the like.

The content server process 3020 may provide one or more search interfaces for the users 3040. For example, the content server process 3020 may create a webpage which includes a search box. Keywords entered into the search box may be passed to the search module 3070. The search module 3070 may search a set of one or more standard search verticals. In some examples, the standard set of search verticals may be selected based upon a determined intention of the user. The intention of the user may be determined by the search module 3070 based upon one or more of the keywords entered by the user. In other examples, the standard set of search verticals may be predetermined. For example, an administrator of the social networking service 3010 may predetermine the default set of search verticals that are to be searched through the search interface. The search module 3070 may execute any number of search algorithms, returning content corresponding to the set of selected search verticals.

Additionally, the search module 3070 may compare the keywords of an entered search against a set of special keywords determined by a keyword processing module 3080. If the keywords of an entered search contain a particular one of the special keywords, the particular keyword is used to search a supplemental set of search verticals. The supplemental set of search verticals were not among the selected search verticals. The search verticals in the supplemental set may be predetermined by the social networking service (e.g., based upon a predetermined list). For example, a newly added search vertical that was not selected because it was not a search vertical that was selected by an administrator for searching, or that the system had determined the user intended to search. The results of the searches run on the sets of search verticals may then be returned to the content server process 3020 to present the results to the user 3040.

The keyword processing module 3080 may determine the special set of keywords that triggers a search of the supplemental set of search verticals. In some examples, these keywords may be determined based upon analysis of a corpus of documents. In some examples, the keyword processing module 3080 may tokenize the documents in the corpus based upon one or more of 1-grams, 2-grams, 3-grams .... n-grams, where n is a predetermined number (e.g., 4). Each token in each field of each document may be assigned a weight score which may be adjusted by an adjustment factor. For each document, the weights for each field are summed and the top tokens for each document in the corpus are then utilized as a candidate set of keywords. The weight scores for each token in the candidate set are then adjusted based upon a second set of adjustment factors - e.g., the popularity of the documents in which they appear and the popularity of the authors of the documents, and summed. The top tokens in the candidate set are then utilized as the set of special keywords. As used in this specification, a "set" is defined to include one or more elements, e.g., a set of keywords may include one or more keywords and each keyword may contain one or more words.

In some examples, finding the special keywords may be done on a parallel processing system 3090. For example, the operations of the keyword processing module 3090 may be executed in parallel on the parallel processing system. For example, using a computing cluster and parallel processing frameworks such as Apache Hadoop™ the parallel processing system 3090 may efficiently calculate the special keywords. In some examples, the parallel processing system 3090 may utilize a MAP-REDUCE programming model.

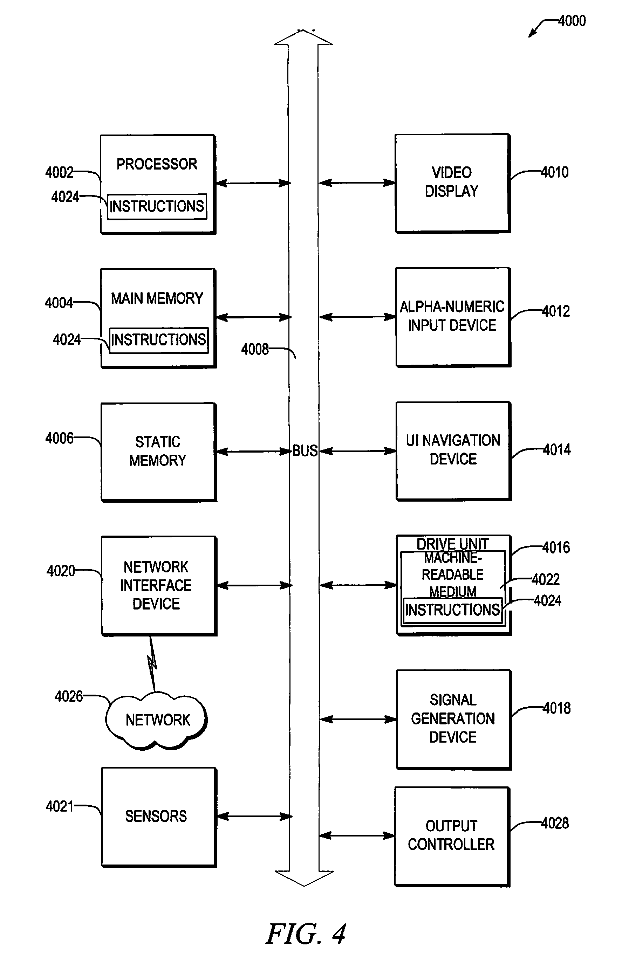

FIG. 4 illustrates a block diagram of an example machine 4000 upon which any one or more of the techniques (e.g., methodologies) discussed herein may perform. In alternative embodiments, the machine 4000 may operate as a standalone device or may be connected (e.g., networked) to other machines. In a networked deployment, the machine 4000 may operate in the capacity of a server machine, a client machine, or both in server-client network environments. In an example, the machine 4000 may act as a peer machine in peer-to-peer (P2P) (or other distributed) network environment. The machine 4000 may be a personal computer (PC), a tablet PC, a set-top box (STB), a personal digital assistant (PDA), a mobile telephone, a smart phone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Machine (e.g., computer system) 4000 may include a hardware processor 4002 (e.g., a central processing unit (CPU), a graphics processing unit (GPU), a hardware processor core, or any combination thereof), a main memory 4004 and a static memory 4006, some or all of which may communicate with each other via an interlink (e.g., bus) 4008. The machine 4000 may further include a video display 4010, an alphanumeric input device 4012 (e.g., a keyboard), and a user interface (UI) navigation device 4014 (e.g., a mouse). In an example, the video display 4010, input device 4012 and UI navigation device 4014 may be a touch screen display. The machine 4000 may additionally include a storage device (e.g., drive unit) 4016, a signal generation device 4018 (e.g., a speaker), a network interface device 4020, and one or more sensors 4021, such as a global positioning system (GPS) sensor, compass, accelerometer, or other sensor. The machine 4000 may include an output controller 4028, such as a serial (e.g., universal serial bus (USB), parallel, or other wired or wireless (e.g., infrared(IR), near field communication (NFC), etc.) connection to communicate or control one or more peripheral devices (e.g., a printer, card reader, etc.).

The storage device 4016 may include a machine readable medium 4022 on which is stored one or more sets of data structures or instructions 4024 (e.g., software) embodying or utilized by any one or more of the techniques or functions described herein. The instructions 4024 may also reside, completely or at least partially, within the main memory 4004, within static memory 4006, or within the hardware processor 4002 during execution thereof by the machine 4000. In an example, one or any combination of the hardware processor 4002, the main memory 4004, the static memory 4006, or the storage device 4016 may constitute machine readable media.

While the machine readable medium 4022 is illustrated as a single medium, the term "machine readable medium" may include a single medium or multiple media (e.g., a centralized or distributed database, and/or associated caches and servers) configured to store the one or more instructions 4024.

The term "machine readable medium" may include any medium that is capable of storing, encoding, or carrying instructions for execution by the machine 4000 and that cause the machine 4000 to perform any one or more of the techniques of the present disclosure, or that is capable of storing, encoding or carrying data structures used by or associated with such instructions. Non-limiting machine readable medium examples may include solid-state memories, and optical and magnetic media. Specific examples of machine readable media may include: nonvolatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); Solid State Drives (SSD); and CD-ROM and DVD-ROM disks. In some examples, machine readable media may include non-transitory machine readable media. In some examples, machine readable media may include machine readable media that is not a transitory propagating signal.

The instructions 4024 may further be transmitted or received over a communications network 4026 using a transmission medium via the network interface device 4020. The Machine 4000 may communicate with one or more other machines utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi®, IEEE 802.16 family of standards known as WiMax®), IEEE 802.15.4 family of standards, a Long Term Evolution (LTE) family of standards, a Universal Mobile Telecommunications System (UMTS) family of standards, peer-to-peer (P2P) networks, among others. In an example, the network interface device 4020 may include one or more physical jacks (e.g., Ethernet, coaxial, or phone jacks) or one or more antennas to connect to the communications network 4026. In an example, the network interface device 4020 may include a plurality of antennas to wirelessly communicate using at least one of single-input multiple-output (SIMO), multiple-input multiple-output (MIMO), or multiple-input single-output (MISO) techniques. In some examples, the network interface device 4020 may wirelessly communicate using Multiple User MIMO techniques.

## Claims

1. A method for searching content on a social networking service, the method comprising:

   determining a set of special keywords from a corpus of documents on the social networking service;
   receiving a search query from a user;
   searching the social networking service using the search query on a standard set of search verticals to produce a first result;
   determining that the search query includes a keyword in the set of special keywords;
   responsive to determining that the search query includes a keyword in the set of special keywords, searching a supplemental set of search verticals using the keyword to produce a second result, wherein the standard set of search verticals is different than the supplemental set of search verticals; and
   displaying the first and second results to the user.

2. The method of claim 1, wherein the first set of search verticals includes one or more of: people, jobs, companies, groups, and universities, and wherein the second set of search verticals includes content curated by the social networking service.

3. The method of claim 1 or claim 2, wherein displaying the first and second results to the user comprises displaying the second results in a secondary cluster.

4. The method of any preceding claim, wherein determining a set of special keywords from a corpus of documents comprises:

for a first document in the corpus:

tokenizing the first document to produce a first set of tokens;
calculating a score for each token in the first set of tokens; and
calculating a set of top tokens based upon the calculated scores;

aggregating the set of top tokens for the first document and a set of top tokens calculated for a second document in the corpus to produce a set of candidate keywords, the aggregating including calculating an aggregate score for each token in the set of top tokens for the first and second documents; and
determining the set of special keywords based on the aggregate token scores.

5.  The method of claim 4, wherein the set of tokens comprises 1-grams, 2-grams, and 3-grams.

6.  The method of claim 4, wherein calculating a score for each token in the first set of tokens comprises:

for a particular token in the first set of tokens:

for a first particular field in the first document for which the particular token appears:

calculating a weight for the particular token based upon how frequently the term appears in the particular field; and

aggregating the weight for the particular token for the first particular field with at least a weight calculated for the particular token for a second particular field for which the particular token appears, to form a score for the particular token.

7.  The method of claim 6, wherein the weight is adjusted based upon a weighting factor which is based upon the first particular field.

8.  The method of claim 4, wherein aggregating the set of top tokens for the first document and the set of top tokens calculated for the second document comprises:

for a particular token in the first document, adjusting the aggregate score for the particular token based upon a popularity of the author for the first document and a popularity of the first document.

9.  The method of any preceding claim, wherein every search vertical in the first set is different from every search vertical in the second set.

10. Computer apparatus for searching content on a social networking service, the apparatus comprising:

first determining means for determining a set of special keywords from a corpus of documents on the social networking service;
receiving means receiving a search query from a user;
first searching means for searching the social networking service using the search query on a standard set of search verticals to produce a first result;
second determining means for determining that the search query includes a keyword in the set of special keywords;
second searching means, responsive to determining that the search query includes a keyword in the set of special keywords, for searching a supplemental set of search verticals using the keyword to produce a second result, wherein the standard set of search verticals is different than the supplemental set of search verticals; and
display means for displaying the first and second results to the user.

11. The computer apparatus of claim 10, wherein the display means is adapted to display the second results in a secondary cluster.

12. The computer apparatus of claim 10 or claim 11, wherein the first determining means is adapted to:

for a first document in the corpus:

tokenize the first document to produce a first set of tokens;
calculate a score for each token in the first set of tokens; and
calculate a set of top tokens based upon the calculated scores;

aggregate the set of top tokens for the first document and a set of top tokens calculated for a second document in the corpus to produce a set of candidate keywords, the aggregating including calculating an aggregate score for each token in the set of top tokens for the first and second documents; and
determine the set of special keywords based on the aggregate token scores.

**13.** The computer apparatus of claim 12, wherein the set of tokens comprises 1-grams, 2-grams, and 3-grams.

**14.** The computer apparatus of claim 12, wherein the first determining means is adapted to calculate a score for each token in the first set of tokens by:

for a particular token in the first set of tokens:

for a first particular field in the first document for which the particular token appears:

calculate a weight for the particular token based upon how frequently the term appears in the particular field; and

aggregate the weight for the particular token for the first particular field with at least a weight calculated for the particular token for a second particular field for which the particular token appears, to form a score for the particular token.

**15.** A machine-readable medium carrying instructions that, when executed by one or more processors of a machine, cause the machine to carry out the method of any one of claims 1 to 9.

1000

DETERMINE A SET OF
SPECIAL KEYWORDS
FROM A CORPUS OF
DOCUMENTS
— 1010

RECEIVE A SEARCH
QUERY
— 1020

SEARCH USING SEARCH
QUERY ON STANDARD
SET OF VERTICALS
— 1030

DETERMINE THAT THE
SEARCH QUERY
INCLUDES A KEYWORD IN
THE SET OF SPECIAL
KEYWORDS
— 1040

SEARCH A
SUPPLEMENTAL SET OF
SEARCH VERTICALS
— 1050

DISPLAY FIRST AND
SECOND RESULTS TO
USER
— 1070

*FIG. 1*

FIG. 2

FIG. 3

*FIG. 4*

Europäisches
Patentamt

European
Patent Office

Office européen
des brevets

# EUROPEAN SEARCH REPORT

Application Number

EP 15 15 9731

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 690 569 A1 (FACEBOOK INC [US]) 29 January 2014 (2014-01-29) * column 5 - column 11 * * column 46 - column 58 * ----- | 1-15 | INV. G06Q10/10 G06Q50/00 G06F17/30 |
| X | WO 2012/131430 A1 (RATHOD YOGESH CHUNILAL [IN]) 4 October 2012 (2012-10-04) * page 35 - page 39 * ----- | 1-15 | |
| A | WO 2011/109530 A2 (MICROSOFT CORP [US]) 9 September 2011 (2011-09-09) * the whole document * ----- | 1-15 | |

TECHNICAL FIELDS
SEARCHED        (IPC)

G06Q
G06F

The present search report has been drawn up for all claims

| Place of search | Date of completion of the search | Examiner |
|---|---|---|
| Munich | 13 July 2015 | Breidenich, Markus |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 15 9731

This annex lists the patent family members relating to the patent documents cited in the above-mentioned European search report.
The members are as contained in the European Patent Office EDP file on
The European Patent Office is in no way liable for these particulars which are merely given for the purpose of information.

13-07-2015

| Patent document cited in search report | Publication date | Patent family member(s) | Publication date |
|---|---|---|---|
| EP 2690569 A1 | 29-01-2014 | AU 2013293319 A1 <br> CA 2879417 A1 <br> EP 2690569 A1 <br> KR 20150032586 A <br> WO 2014018321 A1 | 12-02-2015 <br> 30-01-2014 <br> 29-01-2014 <br> 26-03-2015 <br> 30-01-2014 |
| WO 2012131430 A1 | 04-10-2012 | US 2014074629 A1 <br> WO 2012131430 A1 | 13-03-2014 <br> 04-10-2012 |
| WO 2011109530 A2 | 09-09-2011 | CN 102770885 A <br> EP 2543016 A2 <br> US 2011218931 A1 <br> WO 2011109530 A2 | 07-11-2012 <br> 09-01-2013 <br> 08-09-2011 <br> 09-09-2011 |

EPO FORM P0459

For more details about this annex : see Official Journal of the European Patent Office, No. 12/82